# EUROPÄISCHE PATENTSCHRIFT

(11) **EP 3 109 991 B1**
(45) Veröffentlichungstag und Bekanntmachung des Hinweises auf die Patenterteilung: **15.11.2017**
(21) Anmeldenummer: 16175458.5
(22) Anmeldetag: 21.06.2016
(51) Int. Cl.: H02M 3/158

(54) **SPANNUNGSVERVIELFACHER FÜR HOCHSTROMANWENDUNG**
VOLTAGE MULTIPLIER FOR HIGH CURRENT USE
ÉLEVATEUR DE TENSION POUR APPLICATION HAUTE TENSION

(30) Priorität: 22.06.2015 DE 102015007883
(43) Veröffentlichungstag der Anmeldung: 28.12.2016
(73) Patentinhaber: Tesat Spacecom GmbH & Co. KG, 71522 Backnang (DE)
(72) Erfinder: Ellermann, Michael, 70193 Stuttgart (DE); Nathan, Adolf, 71522 Backnang (DE)
(74) Vertreter: LKGLOBAL Lorenz & Kopf PartG mbB Patentanwälte

(56) Entgegenhaltungen:
- US-A- 5 598 325
- US-A1- 2013 070 503
- US-B1- 6 429 629

## Beschreibung

### Technisches Gebiet

Die Erfindung betrifft einen Spannungsvervielfacher und eine Spannungsversorgung für einen Verbraucher, insbesondere für einen Verbraucher, der mit Hochspannung versorgt werden muss.

### Hintergrund der Erfindung

Spannungsvervielfacher haben ein breites Einsatz- und Verwendungsfeld. Grundsätzlich werden sie dort eingesetzt, wo es notwendig ist, eine Niederspannung einer bestehenden Spannungsversorgung in eine höhere Spannung für einen Verbraucher zu wandeln. So können Spannungsvervielfacher beispielsweise in Satelliten verwendet werden, welche eine hohe Zahl von Hochspannungskomponenten aufweisen können, von denen möglicherweise jede eine individuell bereitgestellte Hochspannung bzw. einen eigenen Hochspannungswert erfordert. Dazu wird ein Spannungsvervielfacher für jede Hochspannungskomponente bereitgestellt, welcher eine Niederspannung an Bord des Satelliten auf den geforderten Hochspannungswert vervielfacht.
Ein Spannungsvervielfacher kann grundsätzlich so aufgebaut sein, dass ausgehend von einer Eingangsspannung zwei Äste abwechselnd auf einen Ausgang geschaltet werden. Die hierfür notwendigen geregelten Schalter werden über eine Ansteuerspannung leitend oder sperrend geschaltet. Es kann hierbei erforderlich sein, die Ansteuerspannung mit Bezug zu einem unter Umständen wechselnden Potential der Schalter einzustellen, so dass die entsprechende Schaltung hierfür eine hohe Komplexität erfordert.

Als Stand der Technik sind US2013/0070502A1, Us6429629B1 und US5598325 bekannt.

### Zusammenfassung der Erfindung

Es kann als Aufgabe der Erfindung betrachtet werden, einen Spannungsvervielfacher anzugeben, der sich durch eine einfachere Ansteuerung auszeichnet.

Diese Aufgabe wird gelöst durch den Gegenstand des unabhängigen Anspruchs. Weiterbildungen ergeben sich aus den abhängigen Ansprüchen sowie aus der folgenden Beschreibung.

Gemäß einem Aspekt der Erfindung ist ein Spannungsvervielfacher angegeben. Der Spannungsvervielfacher weist eine Mehrzahl von in Reihe geschalteter Windungsblöcke, ein Schaltwerk, einen ersten geregelten Schalter und einen zweiten geregelten Schalter auf. Das Schaltwerk ist ausgeführt, einen ersten Knoten, welcher zwischen einem ersten Windungsblock und einem zweiten Windungsblock angeordnet ist, und einen zweiten Knoten, welcher zwischen einem dritten Windungsblock und einem vierten Windungsblock angeordnet ist, auf Masse zu schalten. Der erste geregelte Schalter ist zwischen dem ersten Windungsblock und dem zweiten Windungsblock angeordnet und der zweite geregelte Schalter ist zwischen dem dritten Windungsblock und dem vierten Windungsblock angeordnet. Der erste geregelte Schalter und der zweite geregelte Schalter sind ausgeführt, in einen leitenden Zustand bzw. einen nicht-leitenden Zustand geschaltet zu werden. Der zweite Windungsblock und der vierte Windungsblock sind jeweils mit einem Ausgang des Spannungsvervielfachers gekoppelt, so dass sich an dem Ausgang eine Ausgangsspannung in Abhängigkeit des Schaltzustands des Schaltwerks einstellt.

Durch die Anordnung der geregelten Schalter zwischen dem ersten Windungsblock und dem zweiten Windungsblock bzw. zwischen dem dritten Windungsblock und dem vierten Windungsblock werden diese durch das Schaltwerk auf Masse bezogen. D.h. dass das Schaltwerk so mit der Reihenschaltung aus Windungsblöcken und geregelten Schaltern verbunden ist, dass jeweils ein Anschluss des Schaltwerks mit einer Schnittstelle eines Schalters elektrisch verbunden ist und diese Schnittstelle auf Masse bezieht. Wird im Rahmen dieser Beschreibung Bezug genommen auf "Masse", so handelt es sich hier um ein elektrisches Bezugspotential, d.h. um ein gemeinsames Potential der Quellen- und Verbraucherspannung. Auch beispielsweise bei einer Verwendung in Satelliten, welche sich in der Erdumlaufbahn befinden, ist unter dem Begriff "Masse" im Zusammenhang mit einem Spannungsvervielfacher ein gemeinsames Potential der Quellen- und Verbraucherspannung zu verstehen. Alternativ kann ein Bezugspotential für die Gesamtanordnung aus Satellit und Spannungsvervielfacher festgelegt sein, die Satellitenmasse kann sich aber auch von der Masse im Kontext des Spannungsvervielfachers unterscheiden. Eine Ansteuerungsspannung für den Steueranschluss der geregelten Schalter kann in dem Spannungsvervielfacher wie hierin beschrieben lediglich auf das genannte Bezugspotential eingestellt sein. Durch die Anordnung der geregelten Schalter zwischen jeweils zwei Windungsblöcken und zudem an einem Knoten, an welchen das Schaltwerk angeschlossen ist, stellt sich an den geregelten Schaltern kein wechselndes Bezugspotential ein und die Ansteuerspannung muss nicht auf eine solche wechselnde Bezugsspannung eingestellt werden, so dass die Komplexität einer Ansteuerschaltung reduziert werden kann. Es wird auch ermöglicht, dass die Spannungsversorgung der geregelten Schalter, welche insbesondere elektrisch bzw. elektronisch geregelte Schalter sein können, nicht potentialfrei sein muss, da die geregelten Schalter in Abhängigkeit des Zustands des Schaltwerks nur auf Bezugspotential herunter springen und in dieser Zeit über eine sog. Bootstrapdiode geladen werden können.

Der Spannungsvervielfacher kann beispielsweise als Spannungsverdreifacher oder Vervielfacher mit beliebigem Faktor aufgebaut sein. Je nachdem wie die Windungsblöcke bemessen sind und wie viele hiervon eingesetzt werden, kann ein beliebiger Vervielfachungsfaktor, insbesondere >=2, eingestellt werden. So kann z.B. auf jedem Ast die Anzahl der Windungsblöcke bzw. das Übersetzungsverhältnis zwischen dem entsprechenden geregelten Schalter und dem Ausgang erhöht werden. Unabhängig von einer solchen Hinzufügung weiterer Windungsblöcke auf einem Ast verbleibt der geregelte Schalter unmittelbar nach dem ersten Windungsblock angeordnet. Die beiden Äste werden am Ausgang des Spannungsvervielfachers zusammengeführt.

Als Windungsblock wird eine Vielzahl von Windungen um einen Kern verstanden, welche jeweils zwei Abgriffe aufweisen, so dass an diesen Abgriffen Spannungen abgegriffen oder eingespeist werden können bzw. so dass an den Abgriffen die geregelten Schalter angeschlossen werden können. In einer Ausführungsform sind alle Windungsblöcke um einen gemeinsamen Kern angeordnet bzw. gewickelt.

Die Windungsblöcke sind in Reihe geschaltet, was bedeutet, dass diese elektrisch in Reihe geschaltet sind. Zwischen den Windungsblöcken können sich Knoten befinden, über welche Spannungen abgegriffen werden können oder an denen weitere Elemente, wie z.B. die geregelten Schalter in die Reihenschaltung von Windungsblöcken integriert sein können. Die geregelten Schalter und die Windungsblöcke bilden damit eine Reihenschaltung.

Die geregelten Schalter können in einen der beiden Zustände leitend/nicht leitend geschaltet werden, d.h. zwischen einer ersten Schnittstelle und einer zweiten Schnittstelle eines geregelten Schalters wird einer dieser beiden Zustände eingenommen. Der leitende bzw. nicht-leitende Zustand kann z.B. in Abhängigkeit der an einem Steueranschluss anliegenden Steuerspannung angenommen werden. Auch ist möglich, dass es sich bei den geregelten Schaltern um selbstgeregelte Schalter handelt, bei denen ein Steueranschluss lediglich zur Energieversorgung genutzt wird und bei denen der leitende Zustand bzw. der nicht-leitende Zustand in Abhängigkeit einer Umgebungsvariable eingenommen wird, wobei es sich bei der Umgebungsvariable z.B. um einen Potentialwert an zumindest einer der Schnittstellen bzw. um einen Potentialunterschied zwischen der ersten Schnittstelle und der zweiten Schnittstelle oder um einen Stromwert handeln kann. Weiterhin wird das Schaltwerk so geschaltet, dass eine Schnittstelle eines geregelten Schalters zu einem Zeitpunkt t auf Bezugspotential geschaltet wird. Entsprechend ergibt sich am Ausgang die Ausgangsspannung.

Der erste geregelte Schalter und der zweite geregelte Schalter können in einer Ausführungsform Gleichrichterdioden sein. Optional können die beiden geregelten Schalter bidirektional sperrende Eigenschaften aufweisen. In einer Ausführungsform können die beiden geregelten Schalter aus jeweils zwei in Reihe geschalteten Feldeffekttransistoren (FET) bestehen, wobei die in Reihe geschalteten FETs an ihren Source-Anschlüssen verbunden sind. In anderen Worten sind die jeweils zwei FET eines geregelten Schalters gegeneinander geschaltet, um bidirektional sperren zu können.

Unter Hochspannung im Zusammenhang dieser Beschreibung ist zu verstehen, wenn ein Verbraucher eine höhere Spannung benötigt, als die speisende Quellenspannung, insbesondere wenn die Quellenspannung und die Verbraucherspannung nicht galvanisch getrennt sind. Die Vorrichtung wie hierin beschrieben kann in verschiedensten Schaltungen verwendet werden, z.B. in bzw. mit mobilen oder stationären batterie- oder netzbetriebenen Verbrauchern.

Die Ausgangsspannung des Spannungsvervielfachers kann neben dem Schaltzustand der geregelten Schalter auch abhängig sein von der Ausführung der Windungsblöcke, wie z.B. der Anzahl der Windungen und weiterer Eigenschaften der Windungsblöcke. Jedenfalls kann der Spannungsvervielfacher unter Berücksichtigung dieser Faktoren auf einen gewünschten Ausgangsspannungswert eingestellt werden.

Gemäß einer Ausführungsform der Erfindung weist der Spannungsvervielfacher einen Eingangsspannungsanschluss auf, welcher zwischen dem ersten Windungsblock und dem dritten Windungsblock angeordnet ist.

Der Eingangsspannungsanschluss bildet in anderen Worten den Ursprung für zwei Äste, welche sich über jeweils mindestens zwei in Reihe geschaltete Windungsblöcke und einen dazwischen angeordneten geregelten Schalter zu dem Ausgang des Spannungsvervielfachers erstrecken. Der Eingangsspannungsanschluss ist ausgeführt, um an eine Quellenspannung oder speisende Spannungsquelle, z.B. an einen Niederspannungsbus in einem Satelliten, angeschlossen zu werden.

Gemäß einer weiteren Ausführungsform der Erfindung weist der Spannungsvervielfacher ein Eingangsfilter auf, welches dem Eingangsspannungsanschluss vorgeschaltet ist, so dass aus einem an dem Eingangsspannungsanschluss anliegenden Spannungsverlauf Störungen oder hochfrequente Schwankungen der Eingangsspannung und Schaltschwankungen von dem Spannungsvervielfacher in Richtung Spannungsquelle herausgefiltert werden können.

Gemäß einer weiteren Ausführungsform der Erfindung ist der Spannungsvervielfacher ausgeführt ist, eine Gleichspannung zu vervielfachen.

Insbesondere nimmt der Spannungsvervielfacher eine niedrige Gleichspannung auf und vervielfacht diese auf eine höhere Gleichspannung. In einer Ausführungsform kann aus einer Gleichspannung eine Impulsspannung erzeugt werden bzw. eine Wechselspannung mit vervielfachtem Spannungswert. Dazu kann insbesondere ein RLC-Glied am Ausgang des Spannungsvervielfachers angepasst bzw. verändert werden, um einen entsprechenden Ausgangsspannungsverlauf bereitzustellen.

Gemäß einer weiteren Ausführungsform der Erfindung weist das Schaltwerk des Spannungsvervielfachers zwei Schalter auf, welche ausgeführt sind, die geregelten Schalter wahlweise nacheinander auf Masse zu schalten.

Dies bedeutet, dass die beiden Schalter des Schaltwerks nur nacheinander auf Durchlass schalten, wobei das Schaltwerk bevorzugt ausgeführt sein kann, dass ein erster Schalter erst nach Ablauf einer vorbestimmten Zeitspanne t nach dem Sperren des zweiten Schalters auf Durchlass schaltet. In anderen Worten gibt es keinen zeitlichen Überlapp zwischen den leitend-Zuständen der beiden Schalter, sondern diese sind zeitlich voneinander sogar beabstandet. Dies ist ein Aspekt des Regelungskonzepts des Spannungsvervielfachers und kann prinzipiell auch geändert werden.

Die Zeitdauer, in der die Schalter des Schaltwerks leitend geschaltet sind, d.h. die geregelten Schalter auf Masse schalten, kann abhängig von einer Ausgangsspannung des Spannungsvervielfachers sein. Dies ist ein Aspekt der Regelung des Spannungsvervielfachers und diese Zeitdauer kann entsprechend variabel sein und auch während der Betriebszeit des Spannungsvervielfachers variiert werden. Alternativ oder zusätzlich kann diese Zeitdauer in Abhängigkeit von dem Ausgangsstrom eingestellt werden. Zwischen den beiden Schaltern und dem Ausgang des Spannungsvervielfachers kann eine Regeleinrichtung eingefügt sein, welche zumindest die hier genannten Regelaufgaben übernimmt. Die Regeleinrichtung kann so angeordnet sein, dass der Schaltzustand des Schaltwerks in Abhängigkeit der Ausgangsspannung und/oder des Ausgangsstroms erfolgt.

Die geregelten Schalter können beispielsweise gegensätzlich zu den Schaltern im Schaltwerk geschaltet werden, d.h. z.B. der geregelte Schalter an einem ersten Schalter des Schaltwerks ist nicht leitend wenn der erste Schalter leitend ist, und ist leitend, wenn der erste Schalter nicht leitend ist. Entsprechend wird der Ast mit dem zweiten Schalter des Schaltwerks gesteuert. Bei den Zustandsübergängen können zeitliche Überlappungen oder Lücken oder beides in Kombinationen eingebaut werden. Die geregelten Schalter in den beiden Ästen können gleichzeitig leitend geschaltet werden, wenn die beiden Schalter des Schaltwerks gleichzeitig sperren.

Gemäß einer weiteren Ausführungsform der Erfindung ist der erste geregelte Schalter und der zweite geregelte Schalter jeweils ein Feldeffekttransistor, welcher jeweils an einem Steueranschluss mit einer von einer Energieversorgungseinheit bereitgestellten Spannung beaufschlagt werden kann, um das Durchlassverhalten der Schalter zu beeinflussen.

Die Ansteuerspannung führt also dazu, dass der Feldeffekttransistor aus dem leitenden in den nicht-leitenden Zustand wechselt oder umgekehrt, je nach Spezifikation des entsprechenden Bauteils. Je nach Höhe der Ansteuerspannung an der Steuerelektrode (auch: gate) ist der Feldeffekttransistor zwischen Abfluss (auch: drain) und Quelle (auch: source) leitend oder sperrend.

Gemäß einer weiteren Ausführungsform der Erfindung handelt es sich bei den Feldeffekttransistoren um MOSFETs (metal-oxide-semiconductor field-effect transistor).

In dieser Ausführungsform ermöglicht der Aufbau des Spannungsvervielfachers, dass die Ansteuerung der MOSFET-Treiber vereinfacht wird, weil nur das Bezugspotential (Masse, wie oben im Zusammenhang mit der Masse des Spannungsvervielfachers beschrieben) berücksichtigt werden muss.

Die gesteuerten Schalter können in einer Ausführungsform als Gleichrichterdioden ausgeführt sein. Sie können bidirektional sperrend sein, z.B. als antiparallel geschaltete FETs. Damit sind Zustände möglich, in denen alle Schalter sich gleichzeitig im sperrenden Zustand befinden.

Gemäß einer weiteren Ausführungsform der Erfindung weist der Spannungsvervielfacher ein Dämpfungsglied auf, welches zwischen dem Eingangsspannungsanschluss und dem Ausgang des Spannungsvervielfachers angeschlossen ist.

Das Dämpfungsglied kann in anderen Worten einen oder beide Äste des Spannungsvervielfachers überbrücken. Das Dämpfungsglied ist ausgeführt, Schaltüberschwinger zu glätten und Energie, die während der Umschaltung zur Hochspannungsphase auf einem Ast aufgenommen wurde, abzugeben, wenn zeitweise keine Spannung über einen der Äste an dem Ausgang anliegt.

Gemäß einer weiteren Ausführungsform der Erfindung weist das Dämpfungsglied eine Z-Diode und eine hierzu in Reihe geschaltete Kapazität auf. Die Kapazität kann sowohl Richtung Bezugspotential "Masse" oder Richtung Eingangsspannungsanschluss geschaltet sein, alternativ in Richtung eines anderen stabilen Potentials.

Gemäß einem weiteren Aspekt der Erfindung ist eine Spannungsversorgung für einen Verbraucher angegeben. Die Spannungsversorgung weist eine Niederspannungsquelle und einen Spannungsvervielfacher wie oben und im Folgenden beschrieben auf. Der Spannungsvervielfacher ist an der Niederspannungsquelle angeschlossen und ausgeführt, die Niederspannung zu vervielfachen und an dem Ausgang dem Verbraucher als Hochspannung bereitzustellen.

Zwei oder mehr Spannungsvervielfacher wie hierin beschrieben können auch in einer kaskadierten Schaltung betrieben werden, d.h. dass der Ausgang eines ersten Spannungsvervielfachers mit dem Eingang eines zweiten Spannungsvervielfachers elektrisch verbunden ist, usw. Damit kann der Vervielfachungsfaktor erhöht werden.

### Kurze Beschreibung der Figuren

Nachfolgend wird anhand der beigefügten Zeichnungen näher auf Ausführungsbeispiele der Erfindung eingegangen. Es zeigen:
- **Fig. 1**: einen herkömmlichen Spannungsverdreifacher, welcher zu Erläuterungszwecken beschrieben wird.
- **Fig. 2**: einen Spannungsverdreifacher gemäß einem Ausführungsbeispiel der Erfindung.
- **Fig. 3**: einen Spannungsverdreifacher gemäß einem Ausführungsbeispiel der Erfindung.
- **Fig. 4**: das Schaltverhalten und einen Ausgangsspannungsverlauf eines Spannungsverdreifachers gemäß einem weiteren Ausführungsbeispiel der Erfindung.

### Detaillierte Beschreibung von Ausführungsbeispielen

Die Darstellungen in den Figuren sind schematisch und nicht maßstabsgetreu. Werden in den nachfolgenden Figuren gleiche Bezugszeichen verwendet, so betreffen diese gleiche oder ähnliche Elemente.

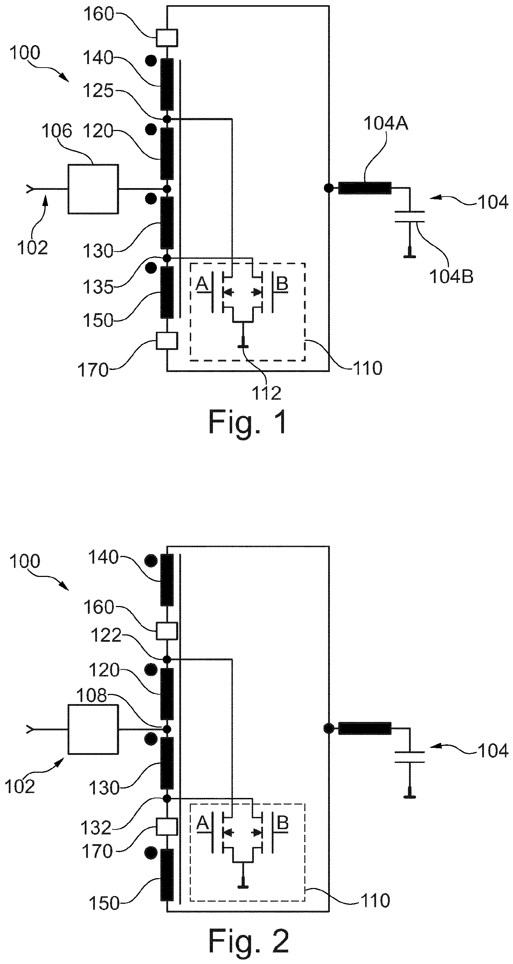

Fig. 1 zeigt einen Spannungsverdreifacher 100, welcher an einem Eingang 102 mit einer Niederspannung versorgt wird und ein dem Ausgang 104 eine vervielfachte (hier: verdreifachte) Hochspannung liefert. Am Eingang ist ein Eingangsfilter 106 geschaltet und führt die Eingangsspannung auf einen Eingangsspannungsanschluss 108 des Spannungsverdreifachers 100.

An dem Eingangsspannungsanschluss 108 verzweigt der Spannungsverdreifacher 100 in zwei Äste, welche jeweils auf den Ausgang 104 führen. Der erste Ast weist den ersten Wicklungsblock 120, den dritten Wicklungsblock 140 sowie den geregelten Schalter 160 auf. Der zweite Ast weist den zweiten Wicklungsblock 130, den vierten Wicklungsblock 150 sowie den geregelten Schalter 170 auf. Es kann der Fig. 1 entnommen werden, dass sämtliche Wicklungsblöcke 120, 130, 140, 150 und die geregelten Schalter 160, 170 in Reihe geschaltet sind. Durch diesen Aufbau und die Schaltvorgänge der geregelten Schalter 160, 170 sowie eines Schaltwerks 110 wird die Spannungsvervielfachung ermöglicht.

Ein Schaltwerk 110 mit zwei Schaltern A und B ist angeordnet, einen Knoten 125 zwischen dem ersten und dritten Wicklungsblock (Schalter A) bzw. einen Knoten 135 zwischen dem zweiten und vierten Wicklungsblock (Schalter B) auf Bezugspotential 112 (Masse) zu schalten. Je nach Schaltzustand des Schaltwerks und der geregelten Schalter 160, 170 wird an den Ausgang eine Spannung über andere Windungsblöcke gelegt.

Je nach Schaltzuständen der Schalter A und B liegen die Bezugspotentiale der geregelten Schalter 160 und 170 nicht auf Masse, sondern auf einem hiervon abweichenden Potential, insbesondere auf einem Potential das niedriger ist als die Masse. Demnach muss die Ansteuerspannung an dieses abweichende Potential angepasst werden, was die Steuereinheit für die geregelten Schalter 160, 170 aufwändig und komplex macht.

Am Ausgang sind eine Induktivität 104A und eine Kapazität 104B in Reihe geschaltet, um Spannungsschwankungen auszugleichen und eine geforderte Gleichspannung zu liefern. Alternativ können am Ausgang beliebige RLC-Kombinationen oder auch nur ein oder mehrere Elemente eines Typs R, L, oder C angeschlossen werden. Ein rein ohmscher Widerstand, beispielsweise, ist dann sinnvoll, wenn am Ausgang eine Wechsel- oder Pulsspannung gewünscht ist.

Fig. 2 zeigt einen Spannungsvervielfacher gemäß einem Ausführungsbeispiel der Erfindung an Hand eines Spannungsverdreifachers. Es sei darauf hingewiesen, dass der Aufbau wie hierin beschrieben für Spannungsvervielfacher mit beliebigen Vervielfachungsfaktoren angewandt werden kann, indem z.B. auf jedem Ast die Anzahl und/oder die Bemessung der Windungsblöcke zwischen den geregelten Schaltern 160, 170 und dem Ausgang 104 erhöht wird. In Fig. 2 werden die gleichen Bezugszeichen wie in Fig. 1 bei der Beschreibung des herkömmlichen Spannungsvervielfachers genutzt. Fig. 1 und die zugehörige Beschreibung unterstützen das Verständnis des Ausführungsbeispiels in Fig. 2.

Im Gegensatz zu dem herkömmlichen Spannungsverdreifacher in Fig. 1 sind die geregelten Schalter 160, 170 zwischen den beiden Windungsblöcken 120, 140 bzw. 130, 150 angeordnet. Die Abgriffe 122, 132 für die Schalter A, B des Schaltwerks befinden sich entsprechend zwischen dem ersten Windungsblock 120 und dem geregelten Schalter 160 bzw. zwischen dem zweiten Windungsblock 130 und dem geregelten Schalter 170. Demnach wird jeder dieser beiden Schalter 160, 170 auf Bezugspotential 112 geschaltet, wenn der entsprechende Schalter A, B des Schaltwerks 110 auf Durchlass schaltet. Die Ansteuerspannung für einen Steueranschluss der geregelten Schalter 160, 170 kann daher stets mit Bezug zu dem Bezugspotential 112 bereitgestellt werden, ein hiervon abweichendes Potential kommt nicht vor und muss nicht berücksichtigt werden.

Bei den Schaltern A und B kann es sich um elektronisch gesteuerte Schalter handeln, z.B. um Transistoren oder Thyristoren. Jedenfalls ist es mindestens erforderlich, dass die Schalter A und B zwei Zustände einnehmen können, nämlich leitend und nicht-leitend. Mechanische Schalter sind hierfür grundsätzlich auch geeignet, soweit diese die geforderte Schaltfrequenz erreichen können.

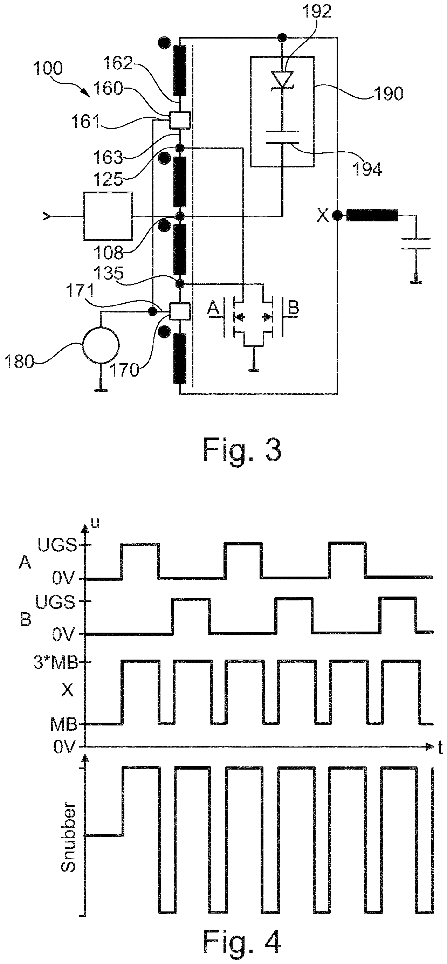

Fig. 3 zeigt einen Spannungsvervielfacher wie in Fig. 2, mit dem Unterschied, dass in Fig. 3 eine Energieversorgung sowie Steuereinheit 180 für die geregelten Schalter 160, 170 gezeigt ist. Die Ansteuerspannung für die geregelten Schalter 160, 170 wird von der Energieversorgung 180 auf einen Steueranschluss 161, 171 der geregelten Schalter geführt, um die geregelten Schalter auf Durchlass zwischen den Schnittstellen 162 und 163 zu schalten (oder zu sperren).

Weiterhin zeigt Fig. 3 ein Dämpfungsglied (auch: Snubber), welches aus einer Reihenschaltung einer Z-Diode 192 und einer Kapazität 194 besteht und den Eingangsspannungsanschluss 108 mit dem Ausgang 104 des Spannungsvervielfachers verbindet.

Es sei darauf hingewiesen, dass sich an dem Ausgang beliebige RLC-Glieder als Kombination eines ohmschen Widerstands, einer Kapazität, und/oder einer Induktivität befinden können. Mit einem LC-Glied kann die Ausgangsspannung geglättet werden. Wird am Ausgang hingegen ein Ausgangsglied lediglich mit ohmschen Widerständen genutzt, kann der Spannungsvervielfacher genutzt werden, um einen oder mehrere Spannungspulse, z.B. eine Reihe periodisch aufeinander folgender Spannungspulse, auszugeben.

Am Ausgang 104 kann eine Freilaufdiode, bzw. allgemein ausgedrückt, ein gesteuerter Schalter, angeordnet sein. Dies kann insbesondere notwendig sein, wenn in dem Spannungsvervielfacher bidirektional sperrende Schalter sowie eine Induktivität am Ausgang genutzt werden.

Es sei angemerkt, dass zwischen dem Eingangsspannungsanschluss 108 und dem Eingangsfilter 106 eine Induktivität angeordnet sein kann, welche den Eingangsstrom begrenzen kann.

Fig. 4 zeigt eine Gegenüberstellung der Schaltzustände an den Schaltern A und B des Schaltwerks 110 und dem Spannungspegel am Ausgang 104 (gekennzeichnet mit X). Weiterhin wird der Lade- und Entladezustand an dem Dämpfungsglied 190 gezeigt.

Schalter A wird geschaltet (Spannung springt von 0 V auf UGS), somit liegt am Ausgang die Ausgangsspannung 3 x MB an (MB für main bus, Spannungswert auf dem Niederspannungsbus am Eingang des Spannungsvervielfachers). Sobald Schalter A sperrt (Spannung fällt von UGS auf 0 V), fällt die Ausgangsspannung auf 0V. Nach einer festgelegten Zeitspanne wird Schalter B geschaltet und am Ausgang steigt die Spannung erneut auf 3 x MB. Unabhängig davon, welcher Schalter (A oder B) des Schaltwerks schaltet, steigt die Spannung am Ausgang auf 3 x MB. Der Spannungsverlauf an X kann in Abhängigkeit der konkreten Realisierung des Spannungsvervielfachers auch anders aussehen, z.B. kann bei Verwendung von bidirektional sperrenden geregelten Schaltern 160, 170 mit ohmscher Last oder unter Verwendung einer Freilaufdiode am Ausgang in den Niederspannungsphasen am Ausgang auf 0 Volt fallen.

Der Snubber 190 wird, durch Schaltüberschwinger während des Umschaltens zum Hochspannungspotential (A oder B schaltet durch), geladen und gibt die Energie ab, wenn das Schaltwerk den Schalter A bzw. B schließt. Somit können Schaltüberschwinger reduziert werden.

### Bezugszeichenliste

- 100: Spannungsvervielfacher
- 102: Eingang (Niederspannung)
- 104: Ausgang (Hochspannung)
- 104A: Induktivität
- 104B: Kapazität
- 106: Eingangsfilter
- 108: Eingangsspannungsanschluss
- 110: Schaltwerk
- 112: Masse
- 120: erster Windungsblock
- 122: Abgriff
- 125: Knoten
- 130: zweiter Windungsblock
- 132: Abgriff
- 135: Knoten
- 140: dritter Windungsblock
- 150: vierter Windungsblock
- 160: gesteuerter Schalter
- 161: Steueranschluss
- 162: erste Schnittstelle
- 163: zweite Schnittstelle
- 170: gesteuerter Schalter
- 171: Steueranschluss
- 180: Energieversorgung
- 190: Dämpfungsglied

## Patentansprüche

1. Spannungsvervielfacher (100), aufweisend:
eine Mehrzahl von in Reihe geschalteter Windungsblöcke (120, 130, 140, 150);
ein Schaltwerk (110), welches ausgeführt ist, einen ersten Knoten (122), welcher zwischen einem ersten Windungsblock (120) und einem zweiten Windungsblock (140) angeordnet ist, und einen zweiten Knoten (132), welcher zwischen einem dritten Windungsblock (130) und einem vierten Windungsblock (150) angeordnet ist, auf Masse zu schalten;
einen ersten geregelten Schalter (160), welcher zwischen dem ersten Windungsblock (120) und dem zweiten Windungsblock (140) angeordnet ist;
einen zweiten geregelten Schalter (170), welcher zwischen dem dritten Windungsblock (130) und dem vierten Windungsblock (150) angeordnet ist;
wobei der erste geregelte Schalter (160) und der zweite geregelte Schalter (170) ausgeführt sind, in einen leitenden Zustand bzw. einen nicht-leitenden Zustand geschaltet zu werden;
wobei der zweite Windungsblock (140) und der vierte Windungsblock (150) mit einem Ausgang (104) des Spannungsvervielfachers (100) gekoppelt sind, so dass sich an dem Ausgang (104) eine Ausgangsspannung in Abhängigkeit des Schaltzustands des Schaltwerks (110) einstellt.

2. Spannungsvervielfacher (100) nach Anspruch 1,
weiterhin aufweisend einen Eingangsspannungsanschluss (108), welcher zwischen dem ersten Windungsblock (120) und dem dritten Windungsblock (130) angeordnet ist.

3. Spannungsvervielfacher (100) nach Anspruch 1 oder 2,
weiterhin aufweisend ein Eingangsfilter (106), welches dem Eingangsspannungsanschluss (108) vorgeschaltet ist, so dass aus einem an dem Eingangsspannungsanschluss anliegenden Spannungsverlauf Störungen herausgefiltert werden können.

4. Spannungsvervielfacher (100) nach einem der vorhergehenden Ansprüche,
wobei der Spannungsvervielfacher ausgeführt ist, eine Gleichspannung zu vervielfachen.

5. Spannungsvervielfacher (100) nach einem der vorhergehenden Ansprüche,
wobei das Schaltwerk zwei Schalter (A, B) aufweist, welche ausgeführt sind, die geregelten Schalter (160, 170) wahlweise nacheinander auf Masse zu schalten.

6. Spannungsvervielfacher (100) nach einem der vorhergehenden Ansprüche,
wobei der erste geregelte Schalter (160) und der zweite geregelte Schalter (170) Feldeffekttransistoren sind, die jeweils an einem Steueranschluss (161, 171) mit einer von einer Energieversorgungseinheit (180) bereitgestellten Spannung beaufschlagt werden können, um das Durchlassverhalten der Schalter zu beeinflussen.

7. Spannungsvervielfacher (100) nach Anspruch 6,
wobei es sich bei den Feldeffekttransistoren um MOSFETs handelt.

8. Spannungsvervielfacher (100) nach einem der Ansprüche 2 bis 7,
weiterhin aufweisend ein Dämpfungsglied (190), welches zwischen dem Eingangsspannungsanschluss (108) und dem Ausgang (104) des Spannungsvervielfachers (100) angeschlossen ist.

9. Spannungsvervielfacher (100) nach Anspruch 8,
wobei das Dämpfungsglied (190) eine Z-Diode (192) und eine hierzu in Reihe geschaltete Kapazität (194) aufweist.

10. Spannungsversorgung für einen Verbraucher, aufweisend:
eine Niederspannungsquelle (102);
einen Spannungsvervielfacher (100) nach einem der Ansprüche 1 bis 9;
wobei der Spannungsvervielfacher an der Niederspannungsquelle (102) angeschlossen ist und ausgeführt ist, die Niederspannung zu vervielfachen und an dem Ausgang (104) dem Verbraucher als Hochspannung bereitzustellen.

## Claims

1. A voltage multiplier (100), comprising:
a plurality of winding blocks (120, 130, 140, 150) connected in series;
a switching circuit (110) which is adapted to switch a first node (122) which is arranged between a first winding block (120) and a second winding block (140), and a second node (132) which is arranged between a third winding block (130) and a fourth winding block (150), to ground;
a first controlled switch (160) which is arranged between the first winding block (120) and the second winding block (140);
a second controlled switch (170) which is arranged between the third winding block (130) and the fourth winding block (150);
wherein the first controlled switch (160) and the second controlled switch (170) are adapted to be switched into a conductive state or a non-conductive state;
wherein the second winding block (140) and the fourth winding block (150) are coupled to an output (104) of the voltage multiplier (100), so that an output voltage is set at the output (104) depending on the switching state of the switching circuit (110).

2. The voltage multiplier (100) of claim 1,
furthermore comprising an input voltage connector (108) which is arranged between the first winding block (120) and the third winding block (130).

3. The voltage multiplier (100) of claim 1 or 2,
furthermore comprising an input filter (106) which is connected upstream of the input voltage connector (108), so that interference can be filtered out of a voltage curve applied at the input voltage connector.

4. The voltage multiplier (100) of one of the preceding claims,
wherein the voltage multiplier is adapted to multiply a DC voltage.

5. The voltage multiplier (100) of one of the preceding claims,
wherein the switching circuit comprises two switches (A, B) which are adapted to selectively switch the controlled switches (160, 170) to ground one after the other.

6. The voltage multiplier (100) of one of the preceding claims,
wherein the first controlled switch (160) and the second controlled switch (170) are field effect transistors which each can be applied, at a control connector (161, 171), with a voltage provided by an energy supply unit (180) in order to influence the let-through behaviour of the switches.

7. The voltage multiplier (100) of claim 6,
wherein the field effect transistors are MOSFETs.

8. The voltage multiplier (100) of one of claims 2 to 7,
furthermore comprising a damping element (190) which is connected between the input voltage connector (108) and the output (104) of the voltage multiplier (100).

9. The voltage multiplier (100) of claim 8,
wherein the damping element (190) comprises a Z diode (192) and a capacitor (194) connected in series thereto.

10. A voltage supply for a consumer, comprising:
a low-voltage source (102);
a voltage multiplier (100) of one of the claims 1 to 9;
wherein the voltage multiplier is connected to the low-voltage source (102) and adapted to multiply the low voltage and provide the same to the consumer as high voltage at the output (104).

## Revendications

1. Multiplicateur de tension (100) présentant :
une pluralité de blocs d'enroulement (120, 130, 140,150) connectés en série ;
un mécanisme de commutation (110) qui est réalisé pour connecter à la masse un premier noeud (122) lequel est disposé entre un premier bloc d'enroulement (120) et un deuxième bloc d'enroulement (140), et un deuxième noeud (132) qui est disposé entre un troisième bloc d'enroulement (130) et un quatrième bloc d'enroulement (150) ;
un premier commutateur régulé (160) qui est disposé entre le premier bloc d'enroulement (120) et le deuxième bloc d'enroulement (140),
un deuxième commutateur régulé (170) qui est disposé entre le troisième bloc d'enroulement (130) et le quatrième bloc d'enroulement (150) ;
dans lequel le premier commutateur régulé (160) et le deuxième commutateur régulé (170) sont réalisés pour être commutés en un état conducteur et en un état non conducteur ;
dans lequel le deuxième bloc d'enroulement (140) et le quatrième bloc d'enroulement (150) sont couplés à une sortie (104) du multiplicateur de tension (100) de sorte qu'à la sortie (104), une tension de sortie se règle en fonction de l'état de commutation du mécanisme de commutation (110).

2. Multiplicateur de tension (100) selon la revendication 1, présentant en outre une borne de tension d'entrée (108) qui est disposée entre le premier bloc d'enroulement (120) et le troisième bloc d'enroulement (130).

3. Multiplicateur de tension (100) selon la revendication 1 ou 2,
présentant en outre un filtre d'entrée (106) qui est connecté en amont de la borne de tension d'entrée (108) de sorte qu'à partir d'une allure de tension présente à la borne de tension d'entrée (108), des défaillances peuvent être filtrées.

4. Multiplicateur de tension (100) selon l'une quelconque des revendications précédentes,
dans lequel le multiplicateur de tension est réalisé pour multiplier une tension continue.

5. Multiplicateur de tension (100) selon l'une quelconque des revendications précédentes,
dans lequel le mécanisme de commutation présente deux commutateurs (A, B) qui sont réalisés pour commuter à la masse les commutateurs régulés (160, 170) sélectivement l'un après l'autre.

6. Multiplicateur de tension (100) selon l'une quelconque des revendications précédentes,
dans lequel le premier commutateur régulé (160) et le deuxième commutateur régulé (170) sont des transistors à effet de champ qui, respectivement à une borne de contrôle (161, 171), peuvent être alimentés avec une tension fournie par une unité d'alimentation en énergie (180) afin d'influencer le comportement de conduction des commutateurs.

7. Multiplicateur de tension (100) selon la revendication 6,
dans lequel les transistors à effet de champ sont des MOSFET.

8. Multiplicateur de tension (100) selon l'une quelconque des revendications 2 à 7,
présentant en outre un atténuateur (190) qui est raccordé entre la borne de tension d'entrée (108) et la sortie (104) du multiplicateur de tension (100).

9. Multiplicateur de tension (100) selon la revendication 8, dans lequel l'atténuateur (190) présente une diode Z (192) et une capacité (194) qui y est connectée en série.

10. Alimentation en tension pour un consommateur, présentant :
une source de basse tension (102) ;
un multiplicateur de tension (100) selon l'une quelconque des revendications 1 à 9 ;
dans laquelle le multiplicateur de tension est raccordé à la source de basse tension (102) et est réalisé pour multiplier la basse tension et la fournir au consommateur à la sortie (104) en tant que haute tension.
